# EUROPÄISCHE PATENTSCHRIFT

(11) **EP 2 868 178 B1**
(45) Veröffentlichungstag und Bekanntmachung des Hinweises auf die Patenterteilung: **06.09.2017**
(21) Anmeldenummer: 14190583.6
(22) Anmeldetag: 28.10.2014
(51) Int. Cl.: A01B 29/04

(54) **Landwirtschaftliche Bodenwalze**
Agricultural soil roller
Rouleau agricole

(30) Priorität: 31.10.2013 DE 202013009670 U
(43) Veröffentlichungstag der Anmeldung: 06.05.2015
(73) Patentinhaber: PÖTTINGER Landtechnik GmbH, 4710 Grieskirchen (AT)
(72) Erfinder: Kirchmayr, Alois, 4070 Pupping (AT); Meindlhumer, Wilhelm, 4713 Gallspach (AT); Preimeß, Hans-Jörg, 9811 Lendorf (AT)
(74) Vertreter: Thoma, Michael

(56) Entgegenhaltungen:
- EP-A1- 2 386 196
- EP-A1- 2 502 476
- EP-A2- 0 598 311
- WO-A1-2012/060770
- DE-U1- 29 714 274
- DE-U1- 29 905 406

## Beschreibung

Die vorliegende Erfindung betrifft eine landwirtschaftliche Bodenwalze mit einem Walzenkorpus, der eine Vielzahl von nebeneinander angeordneten Abrollkörpern umfasst, wobei die Abrollkörper jeweils mehrere bogenförmige Bügelsegmente umfassen, die zusammen die Abrollfläche des jeweiligen Abrollkörpers bilden, wobei die Bügelsegmente mit ihren beiden Enden jeweils starr befestigt und beidseitig abgestützt sind.

Eine solche Bodenwalze ist beispielsweise aus der Schrift WO 2012/060 770 A1 bekannt, bei der die Abrollkörper jeweils aus zwei oder drei jeweils zylindrisch konturierten Bügelsegmenten bestehen.

Solche Bodenwalzen können insbesondere zum streifenweisen Rückverfestigen des Bodens Verwendung finden und als Nachläufergerät bspw. hinter den Säwerkzeugen einer Sämaschine eingesetzt werden. Die streifenweise Bodenverfestigung kann bspw. dazu dienen, in den Säreihen die Saatgutkörner in den Boden zu drücken und dabei den Boden zu verfestigen, zwischen den verfestigten Streifen jedoch den Boden atmen zu lassen und eine Drainagewirkung zuzulassen. Insbesondere kann bei Starkregen die Filtrationswirkung länger erhalten werden.

Vorteilhafterweise verdichten solche Bodenwalzen mit einer Vielzahl nebeneinander angeordneter Abrollkörper den Boden nicht mehr insgesamt stark über die gesamte Fläche, sondern streifenweise relativ stark in der Tiefe, zwischen den genannten Streifen jedoch wenig bis gar nicht. Dabei kann es hilfreich sein, wenn die Abrollkörper des Walzenkorpus zwar die genannte Tiefenverfestigung bewirken, an der Oberfläche jedoch Erde bzw. Bödenmaterial lose darüberschütten. Um diesen Zustreueffekt zu erzielen, können die Abrollkörper nicht in Form geschlossener Scheiben oder kreiszylindrischer Reifen ausgebildet, sondern aus bogenförmig gekrümmten Bügelsegmenten zusammengesetzt sein, so dass zwischen den Bügelsegmenten eines Abrollkörpers Ausnehmungen und/oder in dem von einem Bügelsegment eingefassten Raum Hohlräume bzw. Aussparungen verbleiben, so dass sich in den Aussparungen, Ausnehmungen oder Hohlräumen ansammelndes Erdreich bei der Abrollbewegung ein Stück weit nach oben mitbewegt und dann zerkrümelt auf die verfestigte Bodenkontur fällt. Durch dieses Zukrümeln der verfestigten Bodenkontur stellen sich die erwünschten Filtrations-, Drainage- und Bodenatmungseffekte ein, während andererseits trotzdem die notwendige Bodenverfestigung erzielt wird.

Bodenwalzen der eingangs genannten Art sind bspw. aus der Schrift DE 43 01 519 A1 oder DE 20 0106 545 U1 bekannt, wobei letztere als Bügelsegmente Federbügel vorsieht, die jeweils Zylindersegmente bilden und an elastisch nachgiebigen Speichen angelenkt sind, die mit der Drehachse des Walzenkorpus verbunden sind. Die federbügelartigen Bügelsegmente sind dabei nach Art eines Freischwingers nur an einem Ende befestigt, während das andere Ende frei auskragt, so dass das Bügelsegment eine elastische Nachgiebigkeit erhält. Bodenwalzen mit solchen Freischwinger-Bügelsegmenten sind auch aus den Schriften EP 2 502 476 A1 und DE 29 714 274 U1 bekannt.

Bekannte Bodenwalzen dieses Typs neigen jedoch bisweilen zu einem instabilen Fahrverhalten, insbesondere an geneigten Hangflächen. Zudem ist die Krümelwirkung zumindest bei bestimmten Bodenverhältnissen bislang ungenügend.

Der vorliegenden Erfindung liegt die Aufgabe zugrunde, eine verbesserte landwirtschaftliche Bodenwalze der eingangs genannten Art zu schaffen, die Nachteile des Standes der Technik vermeidet und letzteren in vorteilhafter Weise weiterbildet. Insbesondere soll eine verbesserte Krümelwirkung bei günstigem Schütt- und Streuverhalten erreicht und das Fahrverhalten an geneigten Hangflächen stabilisiert werden.

Erfindungsgemäß wird die genannte Aufgabe durch eine landwirtschaftliche Bodenwalze gemäß Anspruch 1 gelöst. Bevorzugte Ausgestaltungen der Erfindung sind Gegenstand der abhängigen Ansprüche.

Es wird also zunächst vorgeschlagen, die von den Bügelsegmenten gebildete Abrollfläche der Abrollkörper nicht mehr zylindrisch auszubilden, sondern eine von der Zylinderform abweichende Konturierung vorzusehen, so dass ein Bügelsegment nicht mehr gleichmäßig auf dem Boden aufsteht, sondern sich bereichsweise stärker und bereichsweise schwächer in den Boden drückt. Hierdurch kann einerseits die Krümelwirkung verbessert, andererseits ein Abrutschen an schrägen Hangflächen vermieden werden. Erfindungsgemäß besitzen zumindest einige der Bügelsegmente von der Zylinderform abweichende Außenumfangsflächen. Insbesondere können zumindest einige der Bügelsegmente konisch konturierte und/oder quer zur Laufrichtung der Bodenwalze geneigte Außenumfangsflächen besitzen. Bei solchen konisch konturierten bzw. quer geneigten Außenumfangsflächen ist eine Seitenwange des Bügelsegments höher als die andere Seitenwange bzw. definiert eine Seitenwange einen größeren Abrolldurchmesser als die andere Seitenwange, so dass sich das Bügelsegment an der Seite der weiter vorstehenden Seitenwange tiefer in den Boden drückt.

Die Bügelsegmente können dabei gleichmäßig konisch zu einer Seite hin verjüngt ausgebildet sein, es können aber auch schräge bzw. ansteigende Konturierungen mit anderem Konturverlauf vorgesehen sein. Bspw. kann sich die Außenumfangskontur eines Bügelelements - in einer Schnittebene enthaltend die Walzenkorpus-Drehachse - sprungschanzenartig mit gewölbtem Querschnittskonturverlauf zu einer Seite hin erheben oder eine gewisse Balligkeit oder umgekehrt auch eine gewisse Konkavität besitzen. Um eine einfache Fertigung zu ermöglichen und ein partiell zu tiefes Einschneiden in den Boden zu vermeiden, kann es jedoch hilfreich sein, die Außenkontur der Bügelsegmente gleichmäßig konisch auszubilden, so dass die Außenumfangskontur in einem Längsschnitt enthaltend die Walzenkorpus-Drehachse betrachtet gerade erstreckt.

Die Konizität bzw. Neigung der Außenfläche der Bügelsegmente kann dabei grundsätzlich unterschiedlich stark bemessen sein, wobei in vorteilhafter Weiterbildung der Erfindung ein Neigungs- bzw. Konuswinkel von 2 x 5° bis 2 x 20°, vorzugsweise etwa 2 x 10° vorteilhaft sein kann.

Um einen Seitenzug der Bodenwalze im Fahrverhalten zu vermeiden und eine hohe Spurtreue bei nach rechts abfallenden Hangflächen gleichermaßen wie bei nach links abfallenden Hangflächen zu erreichen, sind erfindungsgemäß verschiedene Abrollkörper außenumfangsseitig zu verschiedenen Seiten hin konisch bzw. geneigt ausgebildet. Während ein Teil der Abrollkörper des Walzenkorpus in Fahrtrichtung betrachtet zur rechten Seite hin angeschrägt bzw. konisch ist, ist ein anderer Teil der Abrollkörper zur gegenüberliegenden linken Seite hin angeschrägt bzw. konisch.

In Weiterbildung der Erfindung können dabei vorteilhafter Weise abwechselnd Abrollkörper, die außenumfangsseitig zur einen Seite hin geneigt sind, und Abrollkörper, die außenumfangsseitig zur anderen Seite hin geneigt sind, vorgesehen sein. Bspw. kann jeder zweite Abrollkörper des Walzenkorpus zum in Fahrtrichtung betrachtet linken Ende des Walzenkorpus konisch ausgebildet bzw. schräg konturiert sein, während die restlichen Abrollkörper zur rechten Seite hin konisch bzw. schräg ausgebildet sein können. Grundsätzlich sind jedoch auch andere gruppenweise zu verschiedenen Seiten hin konische Gruppierungen möglich, bspw. dergestalt, dass drei nach links konische Abrollkörper mit drei nach rechts konischen Abrollkörpern abwechseln.

Um die Fahrstabilität zu erhöhen und gleichzeitig die Krümelwirkung zu verbessern, können zumindest einige Bügelsegmente jeweils beidseitig befestigt bzw. mit beiden Enden fest angelenkt sein und/oder eine geschlossene Bogenkontur bilden. Durch eine solche beidseitige Anlenkung bzw. Befestigung der Bügelsegmente erhalten diese eine höhere Verwindungssteifigkeit, so dass sie sich bspw. weniger leicht quer zur Fahrtrichtung auslenken lassen, wodurch eine bessere Seitenführung insbesondere bei Hangfahrten erzielt wird. Zum anderen werden auch härtere Erdklumpen oder Krummen zerdrückt, da auch die radiale Nachgiebigkeit der Bügelsegmente verringert ist und sich die Bügelsegmente weniger leicht radial nach innen drücken lassen, wodurch eine bessere Zerkrümelung des Erdreichs erreicht werden kann. Eine solche beidseitige Befestigung kann insbesondere in Verbindung mit der zuvor erläuterten Konizität bzw. Neigung der Außenumfangsflächen von Vorteil sein, um die verbesserte Zerkrümelung und Seitenfahrstabilität zu erreichen, kann grundsätzlich aber auch ohne eine solche konische bzw. geneigte Ausbildung der Außenumfangsflächen vorgesehen sein und zumindest teilweise die genannten, gewünschten Effekte erzielen.

Die Bügelsegmente können dabei in Richtung der Walzenkorpus-Drehachse betrachtet grundsätzlich verschieden konturiert sein, wobei in vorteilhafter Weiterbildung der Erfindung eine insgesamt - grob gesprochen - U-förmige Konturierung und insbesondere eine tortenstückförmige Konturierung vorgesehen sein kann, bei der ein balliger, insbesondere etwa kreisförmiger Mittelabschnitt, der ein Segment der Abrollfläche bildet, seitlich von zwei Halteschenkeln eingefasst sein kann, die aufeinander zu geneigt, insbesondere radial auf die Walzenkorpus-Drehachse zulaufend ausgebildet sein können. Vorteilhafterweise ist der Übergang zwischen den seitlichen Halteschenkeln und dem genannten balligen Mittelabschnitt abgerundet ausgebildet, so dass sich zwischen zwei in Umfangsrichtung aufeinanderfolgenden Bügelsegmenten eine zu beiden Seiten hin abgerundete Ausnehmung bildet, wodurch die Krümelwirkung weiter verbessert werden kann.

Um den Umfang eines Abrollkörpers verteilt können hierbei mehrere Bügelsegmente verteilt angeordnet sein, wobei die Bügelsegmente vorteilhafterweise unter Bildung lediglich eines Spalts oder einer schmalen V-förmigen Ausnehmung zwischen benachbarten Bügelsegmenten aneinander anschließen. Insbesondere können die seitlichen Haltestege zweier benachbarter Bügelsegmente miteinander verbunden sein, gegebenenfalls unter Zwischenschaltung eines Distanzstücks, wobei sich die genannten Haltestege insbesondere etwa speichenartig nach innen zur Drehachse des Walzenkorpus hin erstrecken können.

Die Größe der mehreren Bügelsegmente eines Abrollkörpers kann dabei unterschiedlich gewählt und an die Anzahl der vorhandenen Bügelsegmente pro Abrollkorpus angepasst sein. In vorteilhafter Weiterbildung der Erfindung können zwischen zwei und sechs Bügelsegmente pro Abrollkorpus vorhanden sein, wobei sich die Bügelsegmente hierbei jeweils über einen Winkelbereich von 180° bis 60° erstrecken können. Werden gemäß einer vorteilhaften Weiterbildung der Erfindung vier Bügelsegmente für einen Abrollkorpus vorgesehen, kann sich jedes Bügelsegment über etwa 90° des Abrollkorpus erstrecken, so dass die vier Bügelsegmente in Richtung der Walzenkorpus-Drehachse betrachtet ein vierblättriges Kleeblatt bilden bzw. dessen Außenkontur nachformen.

Nachfolgend wird die Erfindung anhand eines bevorzugten Ausführungsbeispiels und zugehöriger Zeichnungen näher erläutert. In den Zeichnungen zeigen:

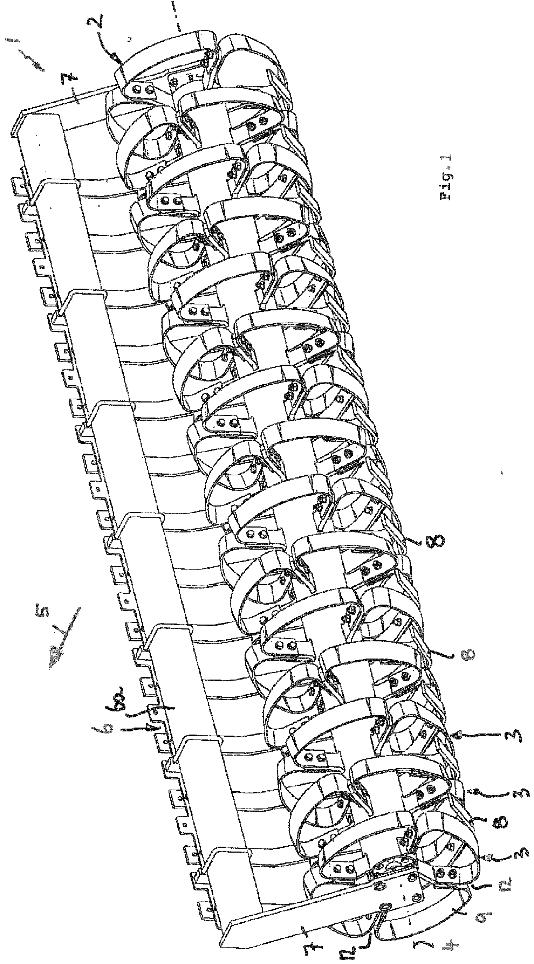

- Fig. 1:: eine schematische, perspektivische Darstellung einer Bodenwalze in Form einer Nachläuferwalze gemäß einer vorteilhaften Ausführung der Erfindung, wobei die von Bügelsegmenten gebildeten Abrollkörper des Walzenkorpus und zwischen die genannten Abrollkörper eingreifende Abstreifer gezeigt sind,

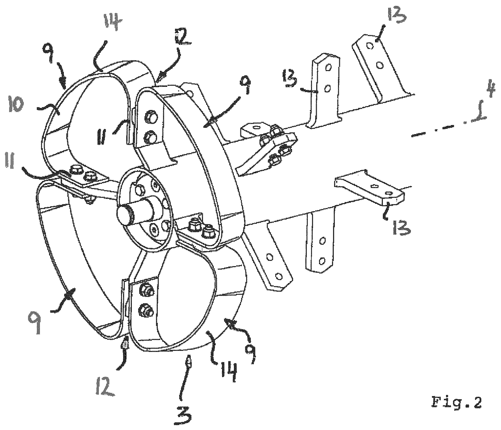

- Fig. 2:: eine perspektivische, ausschnittsweise Darstellung des Walzenkorpus aus Fig. 1, wobei an der Drehachse des Walzenkorpus nur ein Abrollkörper umfassend vier Bügelsegmente angebracht ist, während von benachbarten Abrollkörpern nur die Befestigungsstege bzw. Haltespeichen gezeigt sind, an denen die Bügelsegmente dieser weiteren, benachbarten Abrollkörper montiert werden können, und

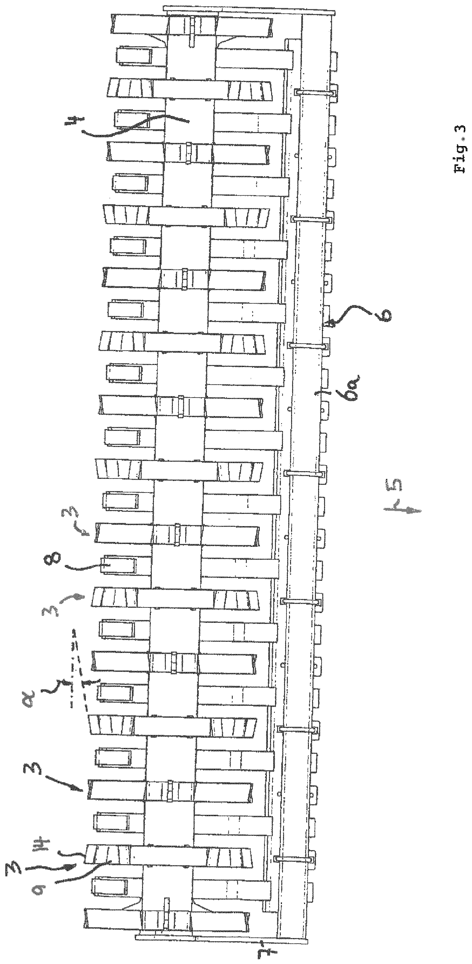

- Fig. 3:: eine Draufsicht auf den Walzen korpus aus den vorhergehenden Figuren.

Wie Fig. 1 zeigt, kann die Bodenwalze 1 einen Walzenkorpus 2 umfassen, der einen imaginären zylindrischen Hüllkorpus besitzt, tatsächlich jedoch in eine Vielzahl von scheibenartigen Abrollkörpern 3 unterteilt ist, die selbst wiederum keine zylindrische Außenumfangsfläche besitzen, wie noch näher erläutert wird.

Der Walzenkorpus 2 umfasst dabei eine Walzenkorpus-Drehachse 4, die sich liegend quer zur Fahrtrichtung 5 erstreckt und an einem Walzenträger 6 aufgehängt ist. Der Walzenträger 6 kann einen sich liegend quer zur Fahrtrichtung erstreckende Querbalken 6a umfassen, an dessen Enden vorzugsweise schräg nach hinten/unten verlaufende Aufhängungslenker 7 angebracht sind, an denen die Walzenkorpus-Drehachse 4 drehbar gelagert ist.

Die Bodenwalze 1 kann dabei als Nachläufer bspw. hinter den Säwerkzeugen einer Sämaschine angebracht sein, aber auch in Verbindung mit einer Scheibenegge oder einem anderen Bodenbearbeitungswerkzeug verwendet werden.

Wie Fig. 1 zeigt, können zwischen den einzelnen Abrollkörpern 3 über den Boden streichende Abstreifer bzw. Zustreifer 8 vorgesehen sein, die sich vom Walzenträger 6 her, an dem sie aufgehängt sein können, zwischen die Abrollkörper 3 hinein zum Boden erstrecken.

Die Abrollkörper 3 werden dabei jeweils von einer Mehrzahl von Bügelsegmenten 9 gebildet, wobei, wie Fig. 1 zeigt, jeweils vier Bügelsegmente 9 einen Abrollkörper 3 bilden können, so dass sich ein insgesamt kleeblattförmig konturierter Abrollkörper ergibt.

Die Bügelsegmente 9 erstrecken sich dabei über etwa 90° und besitzen jeweils einen balligen, insbesondere etwa kreisbogenförmig um die Walzenkorpus-Drehachse 4 gebogenen Mittelabschnitt 10, der beidseits bzw. an beiden Enden von zwei Halteschenkeln 11 gehalten ist, die an den genannten Mittelabschnitt 11 integral einstückig angeformt sein können. Die genannten Halteschenkel 11 können sich dabei speichenförmig nach innen zur Drehachse 4 hin, insbesondere etwa radial nach innen erstrecken. Vorteilhafterweise kann der Übergang des balligen Mittelabschnitts 10 in die genannten Halteschenkel 11 abgerundet ausgebildet sein, so dass sich zwischen zwei benachbarten Bügelsegmenten 9 eine jeweils V-förmig abgerundete Ausnehmung 12 ergibt, vgl. Fig. 2.

Die Bügelsegmente 9 sind beidseits über die genannten Halteschenkel 11 an der Walzenkorpus-Drehachse 4 befestigt. Die genannte Walzenkorpus-Drehachse 4 kann hierbei speichenförmig nach außen vorspringende Halteelemente 13 bspw. in Form von Befestigungsflanschen umfassen, an denen die Halteschenkel 11 mit ihren inneren Enden starr befestigt, bspw. angeschraubt werden können.

Dabei können jeweils die benachbarten Halteschenkel 11 benachbarter Bügelsegmente 9 an einem gemeinsamen Halteelement 13 befestigt und/oder miteinander verbunden und/oder gemeinsam an der Drehachse 4 verankert werden.

Die Bügelsegmente 9 eines Abrollkörpers 3 können hierbei jeweils gleich groß ausgebildet sein, sich bspw. jeweils über 90° erstrecken. Grundsätzlich wäre es aber auch möglich, unterschiedlich große Bügelsegmente 9 an einem Abrollkörper 3 zusammenzufassen, bspw. zwei 60° Bügelsegmente und zwei 120° Bügelsegmente.

Ferner können die Bügelsegmente verschiedener Abrollkörper drei jeweils gleich groß ausgebildet sein, bspw. dergestalt, dass alle oder zumindest eine Untergruppe der Abrollkörper 3 jeweils aus vier 90°-Bügelsegmenten 9 besteht. Alternativ wäre es allerdings ebenfalls möglich, an verschiedenen Abrollkörpern 3 verschieden große Bügelsegmente 9 vorzusehen.

In Weiterbildung der Erfindung können die Abrollkörper 3 relativ zueinander verdreht an der Walzenkorpus-Drehachse 4 befestigt sein. Wie Fig. 2 zeigt, kann dabei die Verdrehung zwischen zwei nebeneinanderliegenden Abrollkörpern 3 winkelmäßig etwa der halben Größe eines Bügelsegments 9 entsprechen. Werden bspw., wie Fig. 2 zeigt, 90°-Bügelsegmente verwendet, können zwei benachbarte Abrollkörper 3 bzw. deren Bügelsegmente 9 um 45° zueinander verdreht sein, so dass sich die V-förmigen Spalte bzw. Ausnehmungen 12 in Längsrichtung der Drehachse 4 betrachtet nicht überdecken. Die Fig. 2 zeigt diese Verdrehung durch die versetzt angeordneten Halteelemente 13.

Wie Fig. 3 zeigt, sind die Bügelsegmente 9 an ihren Außenumfangsflächen nicht zylindrisch konturiert, sondern quer zur Fahrtrichtung geneigt, insbesondere etwa konisch ausgebildet, so dass sich die Bügelsegmente 9 jeweils zu einem Ende des Walzenkorpus 2 hin verjüngen. Die von den Rändern - bei Betrachtung in Fahrtrichtung definierten Seitenwangen eines Bügelsegments 9 definieren dementsprechend unterschiedlich große Durchmesser bzw. ist eine Seitenwange höher als die andere Seitenwange in Folge der genannten Konizität bzw. Neigung. Der Neigungs- bzw. Konuswinkel α kann dabei bspw. 2 x 10° betragen, vgl. Fig. 3.

Vorteilhafterweise sind dabei nicht alle Bügelsegmente 9 zur gleichen Seite hin konisch bzw. geneigt. Während ein Teil der Bügelsegmente 9 zum linken Ende des Walzenkorpus 2 hin konisch verjüngt sein können, kann für andere Bügelsegmente eine konische Verjüngung zur rechten Seite des Walzenkorpus 2 hin vorgesehen sein. Vorteilhafterweise können die Abrollkörper 3 außenumfangsseitig abwechselnd zu verschiedenen Seiten hin konisch ausgebildet sein. Bspw. kann jeder zweite Abrollkörper 3 gleichorientierte Bügelsegmente 9 aufweisen, während alle dazwischenliegenden Abrollkörper 3 entgegengesetzt orientierte Bügelsegmente 9 aufweisen können. Hierdurch wird ein Seitenzug des Walzenkorpus 2 vermieden und eine Seitenstabilität für nach links abfallende Hangflächen gleichermaßen wie für nach rechts abfallende Hangflächen erreicht. Dabei können in Weiterbildung der Erfindung alle Bügelsegmente 9 an einem Abrollkörper 3 zur gleichen Seite hin geneigt bzw. konisch verjüngt sein, so dass die Außenumfangsfläche des Abrollkörpers insgesamt konisch ist. Alternativ können aber auch die Bügelsegmente innerhalb eines Abrollkörpers 3 zu verschiedenen Seiten hin konisch verjüngt bzw. geneigt ausgebildet sein, bspw. dergestalt, dass bei einem vierbügeligen Abrollkörper 3 zwei Bügelsegmente 9 zur linken Seite konisch verjüngt und die beiden anderen Bügelsegmente 9 zur rechten Seite hin konisch verjüngt sind, vorzugsweise in einander abwechselnder Anordnung.

Durch unterschiedliche Orientierung der Konizitäten der Bügelsegmente 9, sei es von Abrollkörper zu Abrollkörper oder auch innerhalb eines Abrollkörpers 3, kann nicht nur der genannte Seitenzug des Walzenkorpus 2 insgesamt vermieden, sondern auch die Krümelwirkung der Abrollkörper erhöht werden, da sich keine gleichförmigen Verdichtungsstreifen ergeben, die alle gleichmäßig in derselben Orientierung verdichtet wären.

Wie Fig. 1 und 2 zeigen, können die Abrollkörper 3 im Wesentlichen nur aus den genannten Bügelsegmenten 9 bestehen und/oder innerhalb der genannten Bügelsegmente 9 hohl ausgebildet bzw. mit Aussparungen versehen sein, so dass Erdkrümel und Erdreich innerhalb eines Bügelsegments von der rechten Seite eines Abrollkörpers auf die linke Seite des Abrollkörpers hin und umgekehrt hindurchfallen können. Die Bügelsegmente 9 können im Querschnitt nach Art eines Bandstahls ausgebildet sein bzw. einen flachgedrückten, näherungsweise rechteckigen Querschnitt besitzen, so dass beim Eindrücken in den Boden von den Seitenwangen her Erdreich auf die Innenseite der Bügelsegmente 9 fallen kann, so dass dann beim weiteren Abrollen von den Innenseiten der Bügelsegmente 9 Erdkrümel mit nach oben genommen werden und herunterfallen, um die Verdichtungsstreifen zuzustreuen.

## Patentansprüche

1. Landwirtschaftliche Bodenwalze mit einem Walzenkorpus (2), der eine Vielzahl von nebeneinander angeordneten Abrollkörpern (3) umfasst, wobei die Abrollkörper (3) jeweils mehrere bogenförmige Bügelsegmente (9) umfassen, die zusammen die Abrollfläche des jeweiligen Abrollkörpers (3) bilden, wobei die Bügelsegmente (9) mit ihren beiden Enden jeweils starr befestigt und beidseitig abgestützt sind, **dadurch gekennzeichnet, dass** zumindest einige der Bügelsegmente (9) quer zur Fahrtrichtung (5) geneigte Außenumfangsflächen (14) besitzen, so dass die Bügelsegmente (9) sich jeweils zu einem Ende des Walzenkorpus (2) hin verjüngen,
wobei verschiedene Abrollkörper (3) verschieden orientierte Bügelsegmente (9), die zu verschiedenen Seiten hin geneigt ausgebildet sind, aufweisen, wobei eine Gruppe der Abrollkörper (3) des Walzenkorpus (2) in Fahrtrichtung betrachtet zur rechten Seite hin verjüngt und eine andere Gruppe Abrollkörper (3) zur gegenüberliegenden linken Seite hin verjüngt ist,

2. Landwirtschaftliche Bodenwalze nach dem vorhergehenden Anspruch, wobei eine abwechselnde Anordnung der zu verschiedenen Seiten hin orientierten Abrollkörper vorgesehen ist, wobei Abrollkörper (3), deren Bügelsegmente (9) außenumfangsseitig in ihrer Neigung eine erste Orientierung besitzen, mit Abrollkörpern (3), deren Bügelsegmente (9) außenumfangsseitig in ihrer Neigung eine zweite, der ersten Orientierung entgegengesetzte Orientierung besitzen, abwechseln.

3. Landwirtschaftliche Bodenwalze nach einem der vorhergehenden Ansprüche,
wobei zumindest ein Abrollkörper (3) Bügelsegmente (9) umfasst, die zu verschiedenen Seiten hin geneigt ausgebildet sind, wobei in Umfangsrichtung des Abrollkörpers (3) betrachtet zu einer Seite hin geneigte Bügelsegmente (9) mit zu einer anderen, entgegengesetzten Seite hin geneigten Bügelsegmenten (9) abwechseln.

4. Landwirtschaftliche Bodenwalze nach einem der Ansprüche 1 bis 2, wobei zumindest ein Abrollkörper (3) Bügelsegmente (9) umfasst, die alle zur gleichen Seite hin geneigt sind.

5. Landwirtschaftliche Bodenwalze nach einem der vorhergehenden Ansprüche, wobei sich die Bügelsegmente (9) jeweils konisch verjüngen.

6. Landwirtschaftliche Bodenwalze nach einem der vorhergehenden Ansprüche,
wobei die zumindest einigen Bügelsegmente (9) einen geschlossenen Bügelinnenraum umschließen.

7. Landwirtschaftliche Bodenwalze nach einem der vorhergehenden Ansprüche,
wobei die Bügelsegmente (9) jeweils einen balligen, insbesondere kreisbogenförmig um die Walzenkorpus-Drehachse (4) gekrümmten, Mittelabschnitt (10) umfassen, der an seinen gegenüberliegenden Endabschnitten mit zwei Halteschenkeln (11) verbunden ist, die sich zur Walzenkorpus-Drehachse (4) hin nach innen erstrecken und mit der Walzenkorpus-Drehachse (4) jeweils fest, vorzugsweise lösbar verbunden sind.

8. Landwirtschaftliche Bodenwalze nach dem vorhergehenden Anspruch, wobei die Übergänge zwischen dem balligen Mittelabschnitt (10) und den seitlichen Halteschenkeln (11) abgerundet ausgebildet sind.

9. Landwirtschaftliche Bodenwalze nach einem der beiden vorhergehenden Ansprüche, wobei in Umfangsrichtung eines Abrollkörpers (3) benachbarte Bügelsegmente (9) mit ihren einander benachbarten Halteschenkeln (11) miteinander verbunden und/oder an einem gemeinsamen, an der Walzenkorpus-Drehachse (4) befestigten Halteelement (13) befestigt sind.

10. Landwirtschaftliche Bodenwalze nach einem der vorhergehenden Ansprüche,
wobei zwischen in Umfangsrichtung eines Abrollkörpers (3) benachbarten Bügelsegmenten (9) jeweils eine spaltförmige, insbesondere etwa gebogen V-förmige, Ausnehmung (12), die zur Außenumfangsseite hin offen ist, vorgesehen ist, wobei vorzugsweise alle Ausnehmungen (12) zwischen benachbarten Bügelsegmenten (9) eines Abrollkörpers (3) einander entsprechend und/oder gleich ausgebildet sind.

11. Landwirtschaftliche Bodenwalze nach einem der vorhergehenden Ansprüche,
wobei die Bügelsegmente (9) sich jeweils über einen Winkel im Bereich von 45° bis 180°, vorzugsweise 60° bis 120°, insbesondere etwa 90° erstrecken.

12. Landwirtschaftliche Bodenwalze nach einem der vorhergehenden Ansprüche,
wobei zumindest ein Abrollkörper (3) vorgesehen ist, dessen Bügelsegmente (9) alle gleich groß ausgebildet sind, wobei vorzugsweise die Bügelsegmente (9) aller Abrollkörper (3) gleich groß ausgebildet sind.

13. Landwirtschaftliche Bodenwalze nach einem der vorhergehenden Ansprüche,
wobei die Abrollkörper (3) jeweils zwischen zwei und acht, insbesondere drei bis sechs, vorzugsweise vier Bügelsegmente (9) umfassen.

14. Landwirtschaftliche Bodenwalze nach einem der vorhergehenden Ansprüche,
wobei die Abrollkörper (3) voneinander beabstandet angeordnet sind, wobei der Abstand zwischen zwei benachbarten Abrollkörpern (3) mindestens der halben Breite der Bügelsegmente entspricht, vorzugsweise größer ist als die Breite der Bügelsegmente (9) in Fahrtrichtung betrachtet.

15. Landwirtschaftliche Bodenwalze nach einem der vorhergehenden Ansprüche,
wobei zwischen den Abrollkörpern (3) über den Boden gleitende Abstreifer und/oder Zustreicher (8) vorgesehen sind.

## Claims

1. An agricultural soil roller having a roller body (2) that comprises a plurality of roll-off bodies (3) arranged next to one another, wherein the roll-off bodies (3) each comprise a plurality of arcuate hoop segments (9) that together form the roll-off surface of the respective roll-off body (3), wherein the two ends of the hoop segments (9) are each rigidly fastened and are supported at both sides, **characterized in that** at least some of the hoop segments (9) have outer peripheral surfaces (14) inclined transversely to the direction of travel (5) so that the hoop segments (9) each taper toward an end of the roller body (2),
with different roller bodies (3) having differently oriented hoop segments (9) that are formed inclined toward different sides; and with a group of roll-off bodies (3) of the roller body (2) being tapered toward the right side, viewed in the direction of travel, and another group of roll-off bodies (3) being tapered toward the oppositely disposed left side.

2. An agricultural soil roller in accordance with the preceding claim, wherein an alternating arrangement of the roll-off bodies orientated toward different sides is provided, with roll-off bodies (3) whose hoop segments (9) have a first orientation in their inclination at the outer peripheral side alternate with roll-off bodies (3) whose hoop segments (9) have a second orientation, opposite to the first orientation, in their inclination at the outer peripheral side.

3. An agricultural soil roller in accordance with one of the preceding claims, wherein at least one roll-off body (3) comprises hoop segments (9) that are formed inclined toward different sides, with, viewed in the peripheral direction of the roll-off body (3), hoop segments (9) inclined toward one side alternating with hoop segments (9) inclined toward another, oppositely disposed side.

4. An agricultural soil roller in accordance with one of the claims 1 to 2, wherein at least one roll-off body (3) comprises hoop segments (9) that are all inclined toward the same side.

5. An agricultural soil roller in accordance with one of the preceding claims, wherein the hoop segments (9) each taper conically.

6. An agricultural soil roller in accordance with one of the preceding claims, wherein at least some hoop segments (9) surround a closed inner hoop space.

7. An agricultural soil roller in accordance with one of the preceding claims, wherein the hoop segments (9) each comprise a spherical center section, in particular a center section curved in the form of an arc of a circle, about the rotary axle (4) of the roller body, that is connected at its oppositely disposed end sections to two holding limbs (11) that extend inwardly toward the rotary axle (4) of the roller body and are each fixedly, preferably releasably, connected to the rotary axle (4) of the roller body.

8. An agricultural soil roller in accordance with the preceding claim, wherein the transitions between the spherical center section (10) and the lateral holding limbs (11) are rounded.

9. An agricultural soil roller in accordance with one of the two preceding claims, wherein mutually adjacent holding limbs (11) of hoop segments (9) adjacent in the peripheral direction of a roll-off body (3) are connected to one another and/or are fastened to a common holding element (13) fastened to the rotary axle (4) of the roller body.

10. An agricultural soil roller in accordance with one of the preceding claims, wherein a respective gap-shaped recess (12), in particular a cut-out curved in approximately V-shape, that is open toward the outer peripheral side is provided between hoop segments (9) adjacent in the peripheral direction of a roll-off body (3); and wherein all the recesses (12) between adjacent hoop segments (9) of a roll-off body (3) are formed to correspond to and/or the same as one another.

11. An agricultural soil roller in accordance with one of the preceding claims, wherein the hoop segments (9) each extend over an angle in a range from 45° to 180°, preferably 60° to 120°, in particular at approximately 90°.

12. An agricultural soil roller in accordance with one of the preceding claims, wherein at least one roll-off body (3) is provided whose hoop segments (9)are all the same size, with the hoop segments (9) of all the roll-off bodies (3) preferably being the same size.

13. An agricultural soil roller in accordance with one of the preceding claims, wherein the roll-off bodies (3) each comprise between two and eight hoop segments (9), in particular three to six, preferably four hoop segments (9).

14. An agricultural soil roller in accordance with one of the preceding claims, wherein the roll-off bodies (3) are arranged spaced apart from one another, with the spacing between two adjacent roll-off bodies (3) corresponding to at least half the width of the hoop segments, preferably being larger than the width of the hoop segments (9) viewed in the direction of travel.

15. An agricultural soil roller in accordance with one of the preceding claims, wherein scrapers and/or sweepers (8) sliding over the ground are provided between the roll-off bodies (3).

## Revendications

1. Rouleau agricole comprenant une structure de rouleau (2), qui comprend une pluralité de corps de roulement (3) disposés les uns à côté des autres, les corps de roulement (3) comprenant respectivement plusieurs segments d'arceau (9) arqués, qui ensemble forment la surface de roulement du corps de roulement (3) respectif, les segments d'arceau (9) étant respectivement fixés de manière rigide par leurs deux extrémités et supportés des deux côtés, **caractérisé en ce qu'**au moins quelques-uns des segments d'arceau (9) possèdent des surfaces circonférentielles extérieures (14) inclinées transversalement au sens de la marche (5), de telle sorte que les segments d'arceau (9) diminuent de diamètre respectivement en direction d'une extrémité de la structure de rouleau (2),
différents corps de roulement (3) comportant des segments d'arceau (9) orientés différemment, qui sont réalisés inclinés vers différents côtés,
un groupe des corps de roulement (3) de la structure de rouleau (2) diminuant de diamètre vers le côté droit, vu dans le sens de la marche, et un autre groupe de corps de roulement (3) diminuant de diamètre vers le côté gauche opposé.

2. Rouleau agricole selon la revendication précédente, dans lequel un agencement alternant des corps de roulement orientés vers différents côtés est prévu, des corps de roulement (3), dont les segments d'arceau (9) possèdent côté circonférence extérieure une première orientation dans leur inclinaison, alternant avec des corps de roulement (3), dont les segments d'arceau (9) possèdent côté circonférence extérieure une seconde orientation dans leur inclinaison, opposée à la première orientation.

3. Rouleau agricole selon l'une des revendications précédentes, dans lequel au moins un corps de roulement (3) comprend des segments d'arceau (9) qui sont réalisés inclinés vers différents côtés, des segments d'arceau (9) inclinés vers un côté, vu dans le sens circonférentiel du corps de roulement (3), alternant avec des segments d'arceau (9) inclinés vers un autre côté opposé.

4. Rouleau agricole selon l'une des revendications 1 à 2, dans lequel au moins un corps de roulement (3) comprend des segments d'arceau (9) qui sont tous inclinés vers le même côté.

5. Rouleau agricole selon l'une des revendications précédentes, dans lequel les segments d'arceau (9) diminuent de diamètre respectivement de manière conique.

6. Rouleau agricole selon l'une des revendications précédentes, dans lequel les au moins quelques segments d'arceau (9) entourent un espace intérieur d'arceau fermé.

7. Rouleau agricole selon l'une des revendications précédentes, dans lequel les segments d'arceau (9) comprennent respectivement une portion médiane (10) bombée, en particulier incurvée en forme d'arc de cercle autour de l'axe de rotation (4) de la structure de rouleau, ladite portion médiane étant reliée par ses portions d'extrémité opposées à deux branches de maintien (11), qui s'étendent vers l'intérieur vers l'axe de rotation (4) de la structure de rouleau et qui sont reliées respectivement fixement, de préférence de manière détachable, à l'axe de rotation (4) de la structure de rouleau.

8. Rouleau agricole selon la revendication précédente, dans lequel les transitions entre la portion médiane (10) bombée et les branches de maintien (11) latérales sont réalisées de manière arrondie.

9. Rouleau agricole selon l'une des deux revendications précédentes, dans lequel des segments d'arceau (9) voisins dans le sens circonférentiel d'un corps de roulement (3) sont reliés entre eux par leurs branches de maintien (11) voisines et/ou sont fixés à un élément de support (13) commun, fixé à l'axe de rotation (4) de la structure de rouleau.

10. Rouleau agricole selon l'une des revendications précédentes, dans lequel
un évidement (12) en forme d'interstice, en particulier approximativement en forme de V courbe, qui est ouvert vers le côté circonférentiel extérieur, est respectivement prévu entre des segments d'arceau (9) voisins dans le sens circonférentiel d'un corps de roulement (3),
tous les évidements (12) entre des segments d'arceau (9) voisins d'un corps de roulement (3) étant de préférence réalisés de manière correspondante les uns aux autres et/ou identiques.

11. Rouleau agricole selon l'une des revendications précédentes, dans lequel les segments d'arceau (9) s'étendent respectivement sur un angle compris dans une plage de 45° à 180°, de préférence de 60° à 120°.

12. Rouleau agricole selon l'une des revendications précédentes, dans lequel au moins un corps de roulement (3) est prévu, dont les segments d'arceau (9) sont tous réalisés de la même taille, les segments d'arceau (9) de tous les corps de roulement (3) étant de préférence réalisés de la même taille.

13. Rouleau agricole selon l'une des revendications précédentes, dans lequel les corps de roulement (3) comprennent respectivement entre deux et huit, en particulier trois à six, de préférence quatre segments d'arceau (9).

14. Rouleau agricole selon l'une des revendications précédentes, dans lequel les corps de roulement (3) sont disposés espacés les uns des autres, l'écart entre deux corps de roulement (3) voisins correspondant à au moins la moitié de la largeur des segments d'arceau, et étant de préférence supérieur à la largeur des segments d'arceau (9) dans le sens de la marche.

15. Rouleau agricole selon l'une des revendications précédentes, dans lequel des racloirs et/ou des recouvreurs (8) glissant sur le sol sont prévus entre les corps de roulement (3).
